# EUROPÄISCHE PATENTSCHRIFT

(11) **EP 4 455 502 B1**
(45) Veröffentlichungstag und Bekanntmachung des Hinweises auf die Patenterteilung: **01.04.2026**
(21) Anmeldenummer: 24171905.3
(22) Anmeldetag: 23.04.2024
(51) Int. Cl.: F16C 29/00, F16C 29/02, F16C 29/12

(54) **SCHLITTEN FÜR EIN LINEARES FÜHRUNGSSYSTEM**
CARRIAGE FOR LINEAR GUIDANCE SYSTEM
CHARIOT POUR UN SYSTÈME DE GUIDAGE LINÉAIRE

(30) Priorität: 28.04.2023 DE 102023111118
(43) Veröffentlichungstag der Anmeldung: 30.10.2024
(73) Patentinhaber: Accuride International GmbH, 65582 Diez/Lahn (DE)
(72) Erfinder: Neuhaus, Christoph, 56412 Niederelbert (DE); Neidhöfer, Patrick, 56377 Seelbach (DE); Heinz, Jürgen, 56414 Berod (DE)
(74) Vertreter: WSL Patentanwälte Partnerschaft mbB

(56) Entgegenhaltungen:
- DE-A1- 102020 110 563
- DE-U1- 202015 105 035

## Beschreibung

Die vorliegende Erfindung betrifft einen Schlitten für ein lineares Führungssystem, das ein Schienenelement mit zwei zueinander hin zeigenden Laufflächen und den relativ gegenüber dem Schienenelement in und entgegen einer Auszugsrichtung beweglichen Schlitten umfasst, wobei der Schlitten aufweist: einen Grundkörper, ein erstes Paar aus einem ersten Gleiter und einem zweiten Gleiter mit voneinander weg zeigenden Gleitflächen, wobei die Gleitflächen des ersten Gleiters und des zweiten Gleiters mit jeweils einer der Laufflächen in Reibeingriff bringbar sind, wobei der erste Gleiter in einer Hochrichtung senkrecht zu der Auszugsrichtung beweglich gegenüber dem Grundkörper an dem Grundkörper gelagert ist und wobei der zweite Gleiter in der Hochrichtung an dem Grundkörper festgelegt ist, und ein Federelement, wobei das Federelement derart an dem Grundkörper gelagert ist, dass das Federelement den ersten Gleiter in der Hochrichtung von dem zweiten Gleiter weg vorspannt.

Die vorliegende Erfindung betrifft zudem ein lineares Führungssystem mit einem derartigen Schlitten und einem Schienenelement, wobei das Schienenelement zwei zueinander hin zeigende Laufflächen aufweist, wobei der Schlitten und das Schienenelement in und entgegen der Auszugsrichtungen linear gegeneinander verschiebbar sind und wobei der erste und der zweite Gleiter mit jeweils einer der Laufflächen des Schienenelements in Reibeingriff sind.

Lineare Führungssysteme mit einem Schlitten und einem Schienenelement sind in vielfältigen Ausführungsformen aus dem Stand der Technik bekannt. Sie werden in verschiedenen Haushaltsgeräten, aber auch im Automobilbau und vielen weiteren Anwendungsbereichen eingesetzt. Um ein möglichst reibungsarmes Verschieben des Schlittens gegenüber dem Schienenelement zu ermöglichen, sind typischerweise zwischen dem Schienenelement und dem Schlitten Wälzkörper angeordnet, wobei die Wälzkörper bei einer Relativbewegung des Schlittens und des Schienenelements auf jeweils einer Lauffläche des Schienenelements abrollen oder gegenüber der Lauffläche eine Gleitbewegung ausführen. Die hierbei entstehende Roll- und/oder Gleitreibung ist geringer als eine unmittelbare Gleitreibung zwischen dem Schlitten und dem Schienenelement. Allerdings ist es in einer solchen Konstruktion eines linearen Führungssystems schwierig, die zum Verschieben des Schlittens gegenüber dem Schienenelement notwendige Kraft präzise einzustellen. Zudem kann die Position des Schlittens relativ zu dem Schienenelement durch die Wälzkörper nicht in allen Betriebssituationen präzise definiert werden.

Daher ist aus dem Stand der Technik ein Schlitten der eingangs genannten Art für ein lineares Führungssystem sowie ein lineares Führungssystem bekannt, bei denen der Schlitten primär von voneinander weg zeigenden Gleitflächen geführt wird. Solche Gleitflächen können die geometrie- oder konstruktionsbedingt keine Rollbewegungen gegenüber den Laufflächen des Schienenelements ausführen. Dabei ist es bekannt, die Gleitflächen an Gleitern vorzusehen, welche in der Hochrichtung senkrecht zu der Auszugsrichtung beweglich gegenüber dem Grundkörper an dem Grundkörper gelagert sind. Dabei sind im Stand der Technik immer zwei Gleiter jeweils in der Hochrichtung von mindestens einem Federelement voneinander weg und damit auf die Laufflächen des Schienenelements hin vorgespannt. Es hat sich allerdings gezeigt, dass mit einer solchen gegenüber dem Grundkörper beweglichen Anordnung sowohl eines ersten als auch eines zweiten Gleiters nicht in allen Betriebssituationen ein Spiel zwischen dem Grundkörper des Schlittens und dem Schienenelement hinreichend verringert werden kann. Dies kann zu einer für den Benutzer nachteilgen Akustik und/oder Haptik führen.

Die DE 20 2015 105 035 U1 offenbart eine gattungsgemäße Linearführung, aufweisend eine Gleitschiene mit ersten Gleitflächen und einen Schlitten, der mit an die ersten Gleitflächen angepassten zweiten Gleitflächen in einer Verschiebungsrichtung hin und her gleitverschieblich an den ersten Gleitflächen geführt ist. Zudem ist eine selbsteinstellende Spielreduzierung vorgesehen. Die Spielreduzierung umfasst einen Gleiter, der eine Gleitfläche aufweist, die einen Abschnitt einer der ersten Gleitflächen des Schlittens bildet.

Die DE 10 2020 110 563 A1 offenbart zudem einen Schlitten für eine Linearführung, die den Schlitten und ein Schienenelement mit zwei zueinander hin zeigenden Laufflächen umfasst, wobei der Schlitten einen Grundkörper und eine Mehrzahl von Wälzkörpern aufweist, wobei die Mehrzahl von Wälzkörpern derart an dem Grundkörper aufgenommenen ist, dass die Mehrzahl von Wälzkörpern zumindest auf den zwei Laufflächen abrollbar sind oder gegenüber den zwei Laufflächen eine Gleitbewegung ausführen, wobei der Grundkörper eine Position eines jeden aus der Mehrzahl von Wälzkörpern in einer Auszugsrichtung relativ zu dem Grundkörper festlegt, wobei der Schlitten weiterhin zwei Gleitelemente und ein Federelement aufweist, wobei jedes der zwei Gleitelemente in einer Hochrichtung senkrecht zu der Auszugsrichtung beweglich an dem Grundkörper gelagert ist, so dass jedes der zwei Gleitelemente mit jeweils einer der Laufflächen in Reibeingriff bringbar ist, und wobei das Federelement derart an dem Grundkörper gelagert ist, dass das Federelement beide Gleitelemente in der Hochrichtung voneinander weg vorspannt.

Daher ist es Aufgabe der vorliegenden Erfindung einen Schlitten für ein lineares Führungssystem bereitzustellen, der es ermöglicht, mit einem weiter verringerten Spiel an einem Schienenelement aufgenommen zu werden. Zudem ist es Aufgabe der vorliegenden Erfindung, ein lineares Führungssystem mit einem Schlitten und einem Schienenelement bereitzustellen, bei denen der Schlitten ein weiter verringertes Spiel gegenüber dem Schienenelement aufweist.

Zur Lösung dieser Aufgabe wird ein Schlitten für ein lineares Führungssystem gemäß dem unabhängigen Anspruch 1 der vorliegenden Anmeldung vorgeschlagen. Dazu weisen bei einem Schlitten der eingangs genannten Art die Gleitflächen des ersten und des zweiten Gleiters gegenüber dem Grundkörper einen Überstand auf, so dass dann, wenn der Schlitten in dem Schienenelement geführt ist, ausschließlich die Gleitflächen des ersten und des zweiten Gleiters mit den Laufflächen des Schienenelements in Reibeingriff sind.

Der zweite Gleiter ist in der Hochrichtung nicht gegenüber dem Grundkörper beweglich gelagert, sondern zumindest in der Hochrichtung relativ zu dem Grundkörper unbeweglich.

Die vorliegende Erfindung betrifft zunächst einen solchen Schlitten für ein lineares Führungssystem unabhängig von der Ausgestaltung des für das lineare Führungssystem notwendigen Schienenelements.

Die Auszugsrichtung bezeichnet diejenige Richtung, in und entgegen der der Schlitten in einem am Schienenelement montierten Zustand gegenüber dem Schienenelement linear verschiebbar ist. Legt man ein Koordinatensystem in das lineare Führungssystem, so wird die Auszugsrichtung als X-Achse dieses Koordinatensystems festgelegt.

Die Hochrichtung ist eine Richtung senkrecht zu der Auszugsrichtung, die sich im Wesentlichen parallel zu einem Schienenrücken des Schienenelements erstreckt. Mit anderen Worten ausgedrückt ist die Hochrichtung parallel zu der Federkraft, welche das Federelement auf den ersten Gleiter ausübt. Die Hochrichtung verbindet den ersten und den zweiten Gleiter aus dem ersten Paar von Gleitern. Dabei wird die Bezeichnung Hochrichtung unabhängig von der Einbaulage des linearen Führungssystems, d.h. der Ausrichtung des Schienenrückens, verwendet. In dem oben genannten Koordinatensystem definiert die Hochrichtung die Y-Achse.

Eine dritte Achse, die senkrecht zu der Hochrichtung und senkrecht zu der Auszugsrichtung angeordnet ist, definiert die Z-Achse des oben genannten Koordinatensystems. Es versteht sich, dass die Z-Achse im Wesentlichen senkrecht zum Schienenrücken orientiert ist.

Es hat sich gezeigt, dass bekannte Schlitten für ein lineares Führungssystem nach dem Zusammenfügen des Schlittens und des Schienenelements dazu neigen, bei Einleitung von Drehmomenten in den Grundkörper eine Kipp- oder Schwenkbewegung des Grundkörpers gegenüber den mit den Laufflächen des Schienenelements in Kontakt stehenden ersten und zweiten Gleitern erlauben. Ein solches Spiel, welches eine Drehbewegung des Schlittens um die Y-Achse oder um die Z-Achse zulässt, kann für den Anwender eines linearen Führungssystems akustische und haptische Nachteile haben.

Die aus dem Stand der Technik bekannten Maßnahmen versuchen eine mögliche Drehbewegung zwischen dem Grundkörper und den Gleitern, d.h. im verbauten Zustand auch zwischen dem Grundkörper und dem Schienenelement, zu verhindern, indem ein Spiel des Grundkörpers gegen- über dem ersten Gleiter und dem zweiten Gleiter reduziert wird, wobei sowohl der erste Gleiter als auch der zweite Gleiter jeweils in der Hochrichtung beweglich dem Grundkörper aufgenommen sind.

Im Gegensatz dazu ist es die der vorliegenden Erfindung zugrunde liegende Idee, das Spiel des zweiten Gleiters gegenüber dem Grundkörper vollständig zu eliminieren, in dem dieser in der Hochrichtung an dem Grundkörper festgelegt ist. In einer Ausführungsform der Erfindung ist der zweite Gleiter in allen drei definierten Richtungen, d. h. der X-Richtung, der Y-Richtung und der Z-Richtung, des oben definierten Koordinatensystems an dem Grundkörper festgelegt.

Das Festlegen des zweiten Gleiters in der Hochrichtung an dem Grundkörper führt zu einer Verlagerung einer möglichen Drehachse, um welche der Grundkörper gegenüber dem Schienenelement eine Schwenkbewegung unter Last ausführen könnte, auf eine Kontaktlinie zwischen der Gleitfläche des festgelegten zweiten Gleiters und einer Lauffläche des Schienenelements. Diese Verlagerung der möglichen Drehachse verringert das Gesamtspiel, welches der Schlitten gegenüber dem Schienenelement hat.

Trotz einer mit der Festlegung des zweiten Gleiters zumindest in der Hochrichtung an dem Grundkörper einhergehenden Einschränkung der Freiheitsgrade des Schlittens hat sich überraschend gezeigt, dass ein nach wie vor leicht verschiebbares lineares Führungssystem realisiert werden kann. Der Schlitten neigt nicht dazu, gegenüber dem Schienenelement zu verkanten.

Der erste und der zweite Gleiter sind Bauteile, die aufgrund ihrer geometrischen Ausgestaltung und/oder ihrer Montage bzw. Festlegung an dem Grundkörper mit ihren Gleitflächen auf den Laufflächen des Schienenelements ausschließlich gleiten, aber nicht abrollen können. Ein Beispiel für einen solchen Gleiter ist ein Bauteil mit einer zylindrischen bzw. teilzylindrischen Oberfläche, welche die Gleitfläche bildet. Dabei ist die Zylinderachse im Wesentlichen parallel zu der Auszugsrichtung des Schlittens ausgerichtet. Es versteht sich, dass eine solche (teil-)zylindrische Gleitfläche bei der angegebenen Ausrichtung auf der jeweiligen Lauffläche gleiten, aber nicht auf dieser abrollen kann. Ein weiteres Beispiel für einen Gleiter ist ein Bauteil mit einer in einer Schnittebene senkrecht zu der Auszugsrichtung betrachteten polygonalen Querschnittsfläche. Beispielsweise kann der Gleiter V-förmig angeordnete Gleitflächen aufweisen, die im montierten Zustand im Kontakt mit der Lauffläche des Schienenelements sind.

Erfindungsgemäß weisen die Gleitflächen des ersten und des zweiten Gleiters gegenüber dem Grundkörper einen Überstand auf, sodass dann wenn der Schlitten in dem Schienenelement geführt ist, ausschließlich die Gleitflächen des ersten und des zweiten Gleiters mit den Laufflächen des Schienenelements in Reibeingriff sind. In einer Ausführungsformen der Erfindung gilt diese Bedingung in allen Lastsituationen, d. h. auch in Überlastsituationen. In einer solchen Überlastsituation, beispielsweise bei Einleitung von Kräften, die zu einem Drehmoment führen, für welches das lineare Führungssystem im Regelbetrieb nicht ausgelegt ist, sind ausschließlich die Gleitflächen des ersten und zweiten Gleiters mit den Laufflächen des Schienenelements im Reibeingriff und keine Flächen des Grundkörpers. Davon unberührt können andere Abschnitte des Schienenelements außerhalb der zueinander hin zeigenden Gleitflächen, beispielsweise des Schienenrücken mit dem Grundkörpers des Schlittens in Kontakt sein. In einer Ausführungsform der Erfindung sind die Gleitflächen der Gleiter die einzigen Bereiche des Schlittens, die mit dem Schienenelement in Kontakt sind.

In einer Ausführungsform sind zumindest der Grundkörper oder der erste Gleiter derart ausgestaltet, dass der erste Gleiter bei einem Einfedem entgegen einer von dem auf den ersten Gleiter in der Hochrichtung ausgeübten Federkraft eine Wegbegrenzung erfährt, sodass die Gleitfläche des ersten Gleiters auch bei einem vollständigen Einfedern gegenüber dem Grundkörper einen Überstand aufweist, sodass ausschließlich die Gleitflächen des ersten und des zweiten Gleiters mit den Laufflächen des Schienenelements in Reibeingriff sind.

Es versteht sich, dass in einer Ausführungsform der Erfindung zusätzlich auch zumindest der Grundkörper oder der zweite Gleiter der ausgestaltet sind, dass der zweite Gleiter nach seiner Montage an dem Grundkörper gegenüber dem Grundkörper einen Überstand aufweist, sodass ausschließlich die Gleitflächen des ersten und des zweiten Gleiters mit den Laufflächen des Schienenelements in Reibeingriff sind.

Gemäß einer Ausführungsform der vorliegenden Erfindung besteht mindestens zumindest die Gleitfläche des ersten Gleiters oder zumindest die Gleitfläche des zweiten Gleiters aus einem Gleitermaterial, wobei das Gleitermaterial von einem Grundkörpermaterial des Grundkörpers verschieden ist. In einer Ausführungsform der Erfindung bestehen sowohl die Gleitfläche des ersten Gleiters als auch die Gleitfläche des zweiten Gleiters aus einem Gleitermaterial, das von dem Grundkörpermaterial des Grundkörpers verschieden ist. In einer Ausführungsform der Erfindung besteht zumindest der erste Gleiter oder der zweite Gleiter aus einem von dem Grundkörpermaterial des Grundkörpers verschiedenen Gleitermaterial. Derartige Ausführungsformen weisen den Vorteil auf, dass zumindest die Gleitflächen des ersten oder des zweiten Gleiters, vorzugsweise aber die Gleitflächen beider Gleiter oder beide Gleiter insgesamt, aus einem Material hergestellt sein können, welches bessere Gleiteigenschaften, d. h. eine verringerte Gleitreibung beim Eingriff mit den Laufflächen des Schienenelements, als das Grundkörpermaterial aufweist. Derartige Materialien sind aber in der Regel teurer und auch aufwendiger zu verarbeiten als Materialien, die für den im Hinblick auf seinen tribologischen Eigenschaften irrelevanten Grundkörper verwendet werden können.

In einer Ausführungsform der Erfindung sind der erste und/oder der zweite Gleiter aus Kunststoff, vorzugsweise durch Spritzgießen, hergestellt. In einer Ausführungsform der Erfindung ist das Material der Gleitflächen zumindest des ersten Gleiters oder des zweiten Gleiters, vorzugsweise aber das Material des ersten Gleiters und des zweiten Gleiters, ein Tribopolymer, d. h. ein Kunststoffmaterial mit verringerter Gleitreibung. In Betracht kommen für ein solches Kunststoffmaterial herkömmliche Kunststoffe mit einem Additiv zur Reduzierung der Gleitreibung. Ein Beispiel für ein solches Tribopolymer ist POM-AW (Polyoxymethylen), beispielsweise das von der Firma Celanese unter der Marke Hostaform kommerziell erhältliche C 9021 - POM.

In einer Ausführungsform der Erfindung ist der Grundkörper aus Metall oder Kunststoff hergestellt. In einer Ausführungsform der Erfindung ist der Grundkörper durch Kunststoff-Spritzgießen hergestellt. In einer Ausführungsform ist der Grundkörper aus POM (Polyoxymethylen) oder PA (Polyamid) hergestellt. Dabei weist das POM oder PA insbesondere kein Additiv zum Reduzieren der Gleitreibung auf.

In einer Ausführungsform der Erfindung weist zumindest der erste Gleiter eine länglich ausgedehnte, sich in der Auszugsrichtung erstreckende Friktionsbacke und mindestens einen sich von der Friktionsbacke ausgehend in der Hochrichtung erstreckenden Führungsstift auf. Dabei umfasst die Friktionsbacke die Gleitfläche. Der Grundkörper weist in einer solchen Ausführungsform mindestens eine sich in der Hochrichtung erstreckende, zu dem Führungsstift komplementäre Führungsbuchse auf. Der mindestens eine Führungsstift greift in die mindestens eine Führungsbuchse ein, sodass der erste Gleiter in der Hochrichtung gegenüber dem Grundkörper beweglich gelagert ist.

In einer Ausführungsform der Erfindung weist der erste Gleiter zwei in der Auszugsrichtung voneinander beanstandete Führungsstifte auf, wobei der Grundkörper zwei in der Auszugsrichtung voneinander beanstandete Führungsbuchsen aufweist und wobei die zwei Führungsstifte in die zwei Führungsbuchsen eingreifen, sodass der erste Gleiter in der Hochrichtung gegenüber dem Grundkörper beweglich gelagert ist. Eine solche Stiftführung mit einer oder mehreren Kombinationen von Führungsstiften an dem ersten Gleiter und Führungsbuchsen in dem Grundkörper ermöglicht eine spielarme Führung der Bewegung des ersten Gleiters gegenüber dem Grundkörper in der Hochrichtung.

In einer Ausführungsform der Erfindung weist eine erste der zwei Führungsbuchsen einen kreisförmigen Querschnitt auf und eine zweite der zwei Führungsbuchsen weist einen von der Kreisform abweichenden Querschnitt auf. In einer Ausführungsform der Erfindung ist der Führungsstift bzw. jeder der Führungsstifte zylindrisch und weist eine kreisförmige Querschnittsfläche auf.

In einer Ausführungsform der Erfindung sind die zwei Führungsstifte in der Auszugsrichtung symmetrisch an der Friktionsbacke angeordnet.

In einer Ausführungsform der Erfindung sind der erste Gleiter unter zweite Gleiter Gleichteile. Mit anderen Worten ausgedrückt sind der erste Gleiter und der zweite Gleiter identisch ausgestaltet. Eine solche Ausführungsform reduziert den Aufwand bei der Herstellung der Gleiter, insbesondere ist für das Spritzgießen der Gleiter nur eine einzige Form erforderlich.

Daher weist in einer Ausführungsform der Erfindung auch der zweite Gleiter eine länglich ausgedehnte, sich in der Auszugsrichtung erstreckende Friktionsbacke und mindestens einen sich von der Friktionsbacke ausgehend in der Hochrichtung erstreckenden Führungsstift auf. Dabei umfasst die Friktionsbacke des zweiten Gleiters die Gleitfläche des zweiten Gleiters. Der Grundkörper wiederum weist mindestens eine sich in der Hochrichtung erstreckende, zu dem Führungsstift komplementäre Klemmbuchse aufweist, wobei der mindestens eine Führungsstift des zweiten Gleiters in die mindestens eine Klemmbuchse eingreift. Dabei sind der mindestens eine Führungsstift des zweiten Gleiters und die jeweilige Klemmbuchse derart ausgestaltet, dass sich eine Presspassung ergibt, sodass nach der Montage der zweite Gleiter in der Hochrichtung gegenüber dem Grundkörper festgelegt ist.

Es versteht sich, dass in einer Ausführungsform der Erfindung auch der zweite Gleiter zwei in der Auszugsrichtung voneinander beanstandete Führungsstifte der aufweist, wobei der Grundkörper zwei in der Auszugsrichtung voneinander beanstandete Klemmbuchsen aufweist und wobei die zwei Führungsstifte des zweiten Gleiters in die zwei Klemmbuchsen eingreifen.

In einer Ausführungsform der vorliegenden Erfindung ist die Presspassung zwischen dem mindestens einen Führungsstift des zweiten Gleiters und der zugehörigen Klemmbuchse dadurch realisiert, dass eine Quetschraupe bzw. ein Quetschsteg, welcher elastisch verformbar ist, auf der Innenwandfläche der Klemmbuchse angeordnet ist. Eine solche Quetschraupe oder Quetschsteg springt gegenüber der zylindrischen Fläche der Klemmbuchse hervor und verringert elastisch verformbar deren freien Querschnitt.

In einer Ausführungsform der Erfindung ist das Federelement eine Schraubenfeder.

In einer Ausführungsform der Erfindung stützt sich das Federelement an dem ersten Gleiter und an dem zweiten Gleiter ab. Eine solche Ausführungsform ermöglicht es insbesondere dann, wenn der erste Gleiter und der zweite Gleiter Gleichteile sind, das Federelement, vorzugsweise eine Schraubenfeder, so lang wie möglich auszugestalten. Dies wäre konstruktiv nicht möglich, wenn sich das Federelement nur an dem ersten, beweglich gelagerten Gleiter und an dem Grundkörper abstützt.

In einer Ausführungsform der Erfindung weist die Friktionsbacke - gegebenenfalls abgesehen von einem oder mehreren Führungsstiften - eine T-förmige Ausgestaltung auf. Dabei trägt der Querbalken der T-Form die Gleitfläche. Der vertikale Balken der T-Form hingegen dient als Stützelement der Aufnahme des Federelements. Handelt es sich bei dem Federelement um eine Schraubenfeder, so erstreckt sich der vertikale Balken der T-Form in einer Ausführungsform in das Innere der Schraubenfeder hinein. Daher umfassen in einer Ausführungsform der Erfindung der erste Gleiter und der zweite Gleiter jeweils eine länglich ausgedehnte, sich in der Auszugsrichtung erstreckende Friktionsbacke und jeweils einen sich in der Hochrichtung ausgehend von der Friktionsbacke erstreckenden Stützstift. Der Stützstift des ersten Gleiters wird als erster Stützstift bezeichnet, der Stützstift des zweiten Gleiters als zweiter Stützstift. Das Federelement ist in einer solchen Ausführungsform eine Schraubenfeder, wobei sich der erste Stützstift unter zweite Stützstift von gegenüberliegenden Seiten in die Schraubenfeder hinein erstrecken.

Eine solche Ausführungsform weist den Vorteil auf, dass die Schraubenfeder beim Einfedern keine Ausweich- oder Abknickbewegung ausführen kann. Eine solche wird von den ersten und zweiten Stützstiften verhindert. Zwar ist es grundsätzlich möglich, einen solchen Stützstift zum Abstützen des Federelements auf der Seite des in der Hochrichtung festgelegten zweiten Gleiters auch an dem Grundkörper anzuspritzen, dies ist aber für den Formenbau sehr aufwendig. Daraus ergibt sich ein weiterer Vorteil, wenn der zweite Gleiter als ein von dem Grundkörper gesondertes Bauelement vorgesehen ist und identisch ausgestaltet ist wie der erste Gleiter in dieser Hinsicht.

In einer Ausführungsform der vorliegenden Erfindung weist zumindest der Grundkörper oder der erste Gleiter eine Spielreduzierungseinrichtung auf, wobei die Spielreduzierungseinrichtung derart ausgestaltet ist, dass der erste Gleiter im Wesentlichen spielfrei an dem Grundkörper gelagert ist, sodass zumindest eine Drehbewegung des Grundkörpers relativ zu dem ersten Gleiter um eine zu der Hochrichtung parallele Drehachse durch die Spielreduzierungseinrichtung blockiert ist oder eine Drehbewegung des Grundkörpers relativ zu dem ersten Gleiter um eine zu der Hochrichtung und der Auszugsrichtung senkrechte Drehachse durch die Spielreduzierungseinrichtung blockiert ist.

Eine solche Spielreduzierungseinrichtung kann ganz unterschiedliche Ausgestaltungen aufweisen. Es versteht sich, dass in einer Ausführungsform der Erfindung an dem Grundkörper und/oder dem ersten Gleiter eine Mehrzahl von Spielreduzierungseinrichtungen vorgesehen sein kann.

Insbesondere ist in einer Ausführungsform der Erfindung an dem zweiten Gleiter ebenfalls eine Spielreduzierungseinrichtung oder ein Teil davon vorgesehen. Diese Spielreduzierungseinrichtung bewirkt dann zusätzlich zu der Festlegung des zweiten Gleiters an dem Grundkörper in der Hochrichtung eine Festlegung an dem Grundkörper, um eine Drehbewegung des Grundkörpers relativ zu dem zweiten Gleiter um eine zu der Hochrichtung parallele Drehachse und/oder eine Drehbewegung des Grundkörpers relativ zu den zweiten Gleiter um eine zu der Hochrichtung und zu der Auszugsrichtung senkrechte Drehachse zu blockieren.

In einer Ausführungsform weist der Schlitten ein zweites Paar von Gleitern aus einem dritten Gleiter und einem vierten Gleiter mit voneinander weg zeigenden Gleitflächen auf. Ein solches zweits Paar von Gleitern erhöht die Stabilität des Führungssystems bzw. verringert das Spiel zwischen dem Grundkörper und dem Schienenelement im verbauten Zustand des Schlittens.

Es versteht sich, dass zumindest in einer Ausführungsform der Erfindung auch der vierte Gleiter in der Hochrichtung an dem Grundkörper festgelegt ist. In einer Ausführungsform der Erfindung sind der zweite und der vierte Gleiter mit derselben Lauffläche des Schienenelements in Kontakt bringbar bzw. mit dieser in Kontakt.

In einer Ausführungsform der Erfindung sind der erste, der zweite, der dritte und der vierte Gleiter Gleichteile.

Zumindest eine der zuvor genannten Aufgaben wird auch durch ein lineares Führungssystem mit einem Schienenelement, das zwei zueinander hinzeigende Laufflächen aufweist, und einem Schlitten gemäß einer Ausführungsform, so wie sie zuvor dargestellt wurden, gelöst. Dabei sind der Schlitten und das Schienenelement in und entgegen der Auszugsrichtung linear gegeneinander verschiebbar und der erste Gleiter und der zweite Gleiter sind mit jeweils einer der Laufflächen des Schienenelements in Reibeingriff.

Weitere Vorteile, Merkmale und Anwendungsmöglichkeiten der vorliegenden Erfindung werden anhand der folgenden Beschreibung einer Ausführungsform und der dazugehörigen Figuren deutlich. In den Figuren sind gleiche Elemente mit gleichen Bezugszeichen bezeichnet.
- Figur 1: ist eine isometrische Ansicht eines erfindungsgemäßen linearen Führungssystems.
- Figur 2: ist eine Ansicht von schräg oben auf eine erste Längsseite des Schlittens des linearen Führungssystems aus Figur 1.
- Figur 3: ist eine Ansicht von schräg oben auf eine zweite Längsseite des Schlittens aus den Figuren 1 und 2.
- Figur 4: ist eine entlang der Linie A-A aus Figur 3 geschnittene Seitenansicht des Schlittens.
- Figur 5: ist eine entlang der Linie B-B aus Figur 3 geschnittene Seitenansicht des Schlittens.
- Figur 6: ist eine Draufsicht auf den in einer von der Auszugsrichtung und der Hochrichtung aufgespannten Schnittebene geschnittenen Schlitten aus den Figuren 1 bis 5.

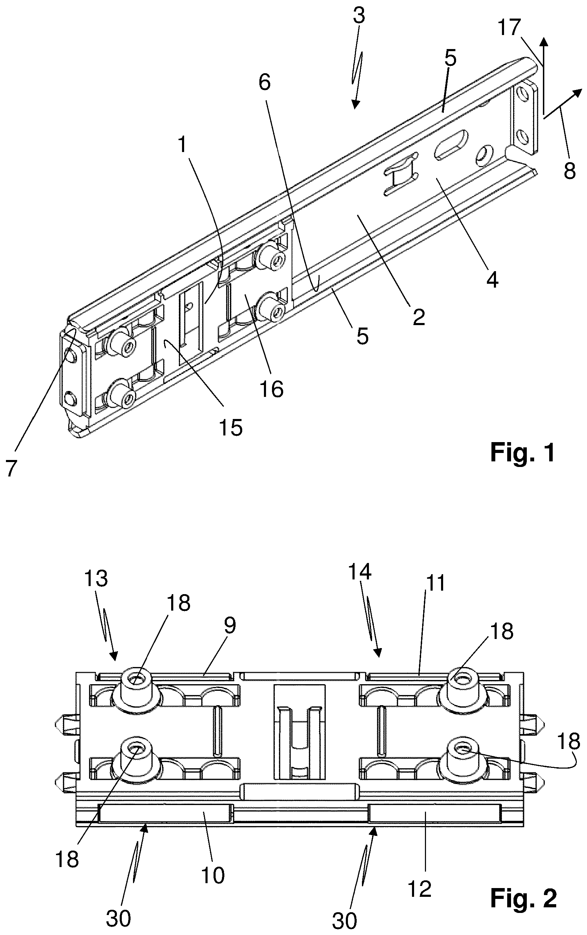

Der in den Figuren dargestellte Schlitten 1 dient der Realisierung einer Linearbewegung entlang eines linearen bzw. geraden Wegs in einem Schienenelement 2. Der Schlitten 1 bildet zusammen mit dem Schienenelement 2 ein lineares Führungssystem in Form einer Linearführung 3. Eine solche Linearführung 3 ist in der Ansicht aus Figur 1 dargestellt.

Das Schienenelement 2 der Linearführung 3 weist einen Schienenrücken 4 auf, welcher zwei einander gegenüber angeordnete Schenkel 5 miteinander verbindet. Die Schenkel 5 tragen die Laufflächen 6, 7 des Schienenelements 2. Die Schenkel 5 des Schienenelements 2 sind teil-kreisförmig gebogen, sodass insgesamt ein im Querschnitt senkrecht zur Auszugsrichtung 8 in etwa C-förmiges Profil entsteht.

Der Schlitten 1 ist innerhalb des C-förmigen Profils des Schienenelements 2 aufgenommen. Der Schlitten 1 stützt sich an den Gleitflächen 6, 7 ausschließlich mit den nachstehend detailliert beschriebenen Gleitern 9, 10, 11, 12 ab und wird so von den Laufflächen 6, 7 des Schienenelements 2 geführt.

Der Schlitten 1 ist für eine Linearbewegung in und entgegen einer Auszugsrichtung 8 an dem Schienenelement 2 ausgelegt. Die Richtung senkrecht zu der Auszugsrichtung 8 und im Wesentlichen parallel zum Schienenrücken 4 des Schienenelements 2 bzw. parallel zu der in den Figuren dargestellten Oberfläche 15 des Grundkörpers 16 wird als Hochrichtung 17 des Schlittens 1 bzw. des Schienenelements 2 oder der Linearführung 3 als Ganzes bezeichnet.

Der Schlitten 1 verfügt über einen Grundkörper 16, der als Träger für ein mobiles Bauteil, das an dem Grundkörper 16 befestigt wird, dient. Ein solches mobiles Bauteil ist beispielsweise eine Schublade, die gegenüber einem stationären Bauteil, an dem das Schienenelement 2 angeschraubt ist, eine lineare Auszugsbewegung erfahren soll. Zu diesem Zweck weist der Grundkörper 16 des Schlittens 1 Innengewinde 18 als Befestigungsmittel, die mit Schrauben verbindbar sind, auf.

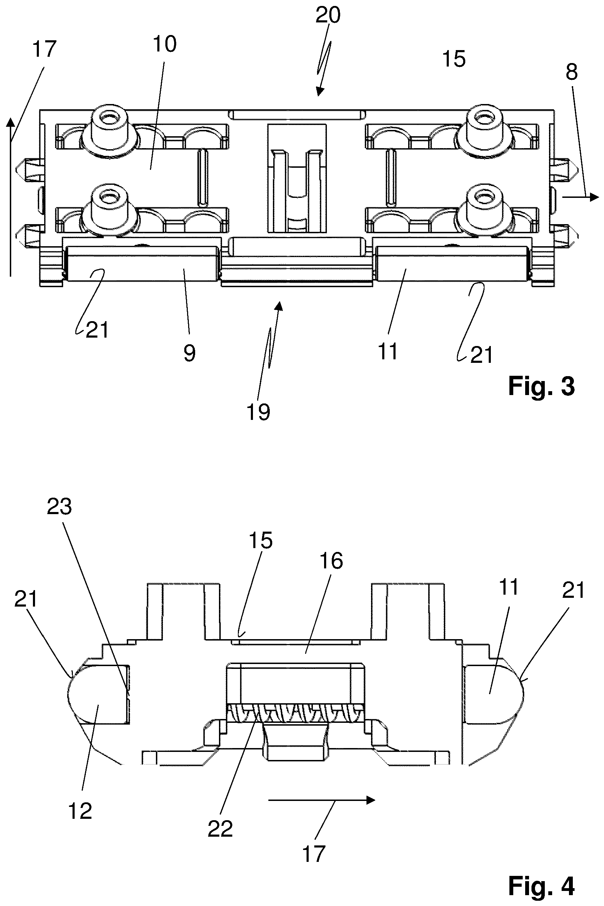

Der allgemeine Aufbau des Schlittens 1 ist den verschiedenen Ansichten des Schlittens 1 aus den Figuren 2 bis 6 zu entnehmen. Der Grundkörper 16 des Schlittens 1 weist zwei Längsseiten 19, 20 auf, die sich in der Auszugsrichtung 8 und den Laufflächen 6, 7 des Schienenelements 2 gegenüberliegend erstrecken. Im Bereich dieser Längsseiten 19, 20 sind alle Oberflächen des Grundkörpers 16 derart ausgestaltet, dass sie in keiner Betriebssituation niveaugleich mit den Gleitflächen 21 der Gleiter 9, 10, 11, 12 sind oder gar gegenüber diesen in Richtung der Laufflächen 6, 7 vorspringen. Dies ist gut in den geschnittenen Ansichten der Figuren 4 bis 6 zu erkennen. Der Grundkörper 16 weist in allen Betriebssituationen ein Spiel gegen-über den Laufflächen 6, 7 des Schienenelements 2 auf. Der Grundkörper 16 kommt in keiner Betriebssituation mit dem Schienenelement 2 im Bereich seiner Laufflächen 6,7 in Kontakt.

Die eigentliche Führung des Schlittens 1 an dem Schienenelement 2 wird von den paarweise an dem Grundkörper 16 angeordneten Gleitem 9, 10, 11,12 bereitgestellt. Das erste Paar 13 von Gleitern wird von den Gleitern 9, 10 gebildet und das zweite Paar von Gleitern 14 von den Gleitern 11, 12. Die beiden Gleiter eines Paares von Gleitern stützen sich jeweils auf den gegenüberliegenden Laufflächen 6, 7 des Schienenelements 2 ab. Die beiden Paare von Gleitern 13, 14 sind bezogen auf die Auszugsrichtung 8 symmetrisch an dem Grundkörper 16 angeordnet.

In der gezeigten Ausführungsform sind die zweiten und vierten Gleiter 10, 12 in der Hochrichtung 17 an dem Grundkörper 16 festgelegt, d.h. die zweiten und vierten Gleiter 10, 12 sind in der Hochrichtung 17 nicht gegenüber dem Grundkörper 16 beweglich. Ein in der geschnittenen Ansicht aus Figur 4 erkennbarer Anschlag 23 sorgt dafür, dass die Gleitfläche 21 des jeweiligen festgelegten Gleiters 10, 12 eine definierte Position in Bezug auf den Grundkörper 16 aufweist und im Bereich der Laufflächen 6, 7 des Schienenelements 2 einen Überstand gegenüber allen Flächen des Grundkörpers 16 aufweist.

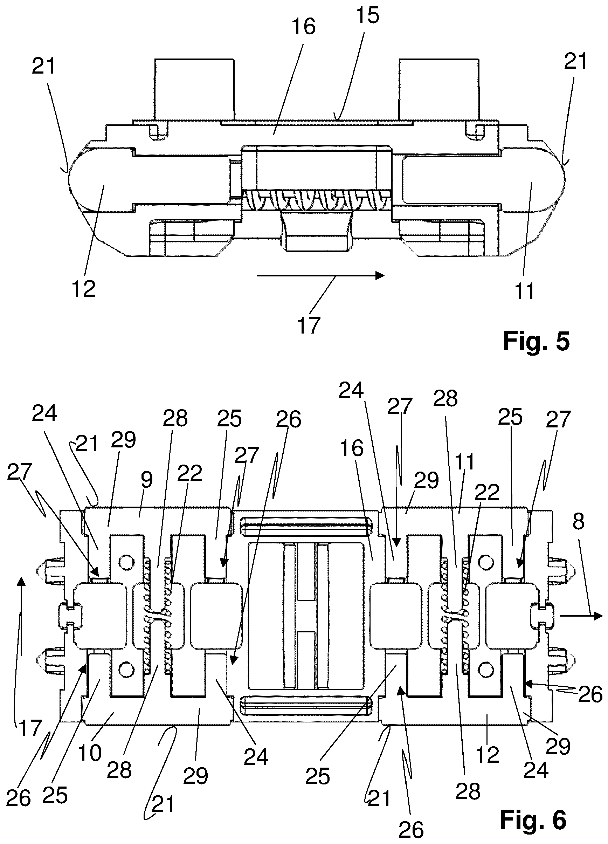

Demgegenüber sind der erste Gleiter 9 unter zweite Gleiter 11 der beiden Paare von Gleitem 13, 14 in der Hochrichtung 17 beweglich an dem Grundkörper 16 gelagert. Eine Schraubenfeder 22 spannt den jeweiligen Gleiter 9, 11 von dem festgelegten Gleiter 10, 12 des jeweiligen Paares 13, 14 weg und damit auf eine der Laufflächen 6, 7 des Schienenelements 2 hin vor. Aus den Darstellungen der Schnittansichten der Figuren 4 und 5 ist unmittelbar ersichtlich, dass durch die Festlegung des zweiten und vierten Gleiters 10, 12 in der Hochrichtung eine mögliche Drehachse des Grundkörpers bei Einleiten einer entsprechenden Kraft in den Bereich der Gleitflächen der gegen- über dem Grundkörper 16 festgelegten zweiten und vierten Gleiter 10,12 verschoben ist. Dies reduziert das Gesamtspiel, welches der Grundkörper 16 gegenüber dem Schienenelement 2 hat.

In der dargestellten Ausführungsform sind alle vier Gleiter 9, 10, 11, 12 Gleichteile. Sie werden durch Spritzgießen in der identischen Form hergestellt. Jeder der Gleiter 9, 10, 11, 12 weist zwei in der Auszugsrichtung 8 voneinander beanstandete Führungsstifte 24, 25 auf. Die Führungsstifte 24, 25 sind jeweils in dazu komplementären Buchsen in dem Grundkörper 16 aufgenommen.

Die in der Hochrichtung 17 festgelegten Gleiter 10, 12 sind in Klemmbuchsen 26 aufgenommen. Dabei sind die Führungsstifte 24, 25 und die Klemmbuchsen 26 derart ausgestaltet, dass die Führungsstifte 24, 25 gegenüber den Klemmbuchsen 26 ein Übermaß aufweisen, sodass beim Einschieben der Gleiter 10, 12 eine Presspassung bereitgestellt wird. Diese Presspassung klemmt die festgelegten Gleiter 10, 12 spielfrei an dem Grundkörper 16.

Demgegenüber sind die Führungsstifte 24, 25 der ersten und dritten, in der Hochrichtung 15 beweglichen Gleiter 9, 11 in Führungsbuchsen 27 in dem Grundkörper 16 aufgenommen. Die Führungsstifte 24, 25 und die Führungsbuchsen 27 bilden eine Spielpassung, sodass die Gleiter 9, 11 gegenüber dem Grundkörper 16 in der Hochrichtung 17 beweglich sind.

In der Schnittansicht aus Figur 6 ist zu erkennen, dass jeder der Gleiter 9, 10, 11, 12 - abgesehen von den Führungsstiften 24, 25, eine T-Förmige Grundform aufweist. Diese setzt sich zusammen aus einem die jeweilige Gleitfläche 21 tragende Friktionsbacke 29 und einer sich ausgehend von der Friktionsbacke 29 in der Hochrichtung 17 erstreckenden Stützstift 28. Die beiden Schraubenfedern 22 stützen sich zum einen an den festgelegten Gleitern 10, 12 und zum anderen an den in der Hochrichtung 17 beweglich gelagerten Gleitern 9, 11 ab. Dazu erstrecken sich der erste Stützstift 28 des ersten und dritten Gleiters 9, 11 und der zweite Stützstift 28 des zweiten und vierten Gleiters 10, 12 von gegenüberliegenden Seiten in die Schraubenfedern 22 hinein.

Um zusätzlich zu der Kombination aus Führungsstift 24, 25 und Klemmbuchse 26 eine Klemmung des in der Hochrichtung 17 festgelegten jeweiligen Gleiters 10, 12 einem Grundkörper 16 bereitzustellen, sind die festgelegten Gleiter 10 , 12 in Taschen 30 in dem Grundkörper 16 aufgenommen. Diese Taschen 30 sind derart ausgestaltet sind, dass sie die Friktionsbacken der beiden Gleiter 10,12 in Presspassung aufnehmen.

In der dargestellten Ausführungsform ist der Grundkörper 16 durch Spritzgießen aus POM (Polyoxymethylen) hergestellt. Dabei weist das Material des Grundkörpers kein die Gleitreibung reduzierendes Additiv auf. Alle vier Gleiter 9, 10, 11, 12 sind zwar ebenfalls durch Spritzgießen hergestellt, jedoch aus einem anderen Material, nämlich POM-AW, d.h. POM mit einem die Gleitreibung reduzierenden Additiv. Für dieses ist sowohl der Materialpreis auch von seiner Verarbeitung teurer und aufwendiger, es weist aber eine verringerte Gleitreibung gegenüber dem Schienenelement 2 auf.

Für Zwecke der ursprünglichen Offenbarung wird darauf hingewiesen, dass sämtliche Merk-male, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinier-bar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich bei-spielhaft und ist nicht als Beschränkung des Schutzbereichs gedacht, so wie er durch die An-sprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht. Die Erfindung wird durch die anhängigen Ansprüche definiert.

### Bezugszeichenliste

- 1: Schlitten
- 2: Schienenelement
- 3: Linearführung
- 4: Schienenrücken
- 5: Schenkel des Schienenelements 2
- 6, 7: Lauffläche
- 8: Auszugsrichtung
- 9, 10, 11, 12: Gleiter
- 13: erstes Paar von Gleitern
- 14: zweites Paar von Gleitern
- 15: Oberfläche
- 16: Grundkörper
- 17: Hochrichtung
- 18: Innengewinde
- 19, 20: Längsseite
- 21: Gleitfläche
- 22: Schraubenfeder
- 23: Anschlag
- 24, 25: Führungsstift
- 26: Klemmbuchse
- 27: Führungsbuchse
- 28: Stützstift
- 29: Friktionsbacke
- 30: Tasche

## Patentansprüche

1. Schlitten (1) für ein lineares Führungssystem (3), das ein Schienenelement (2) mit zwei zueinander hin zeigenden Laufflächen (6, 7) und den relativ gegenüber dem Schienenelement (2) in und entgegen einer Auszugsrichtung (8) beweglichen Schlitten (1) umfasst, wobei der Schlitten (1) aufweist
einen Grundkörper (16),
ein erstes Paar aus einem ersten Gleiter (9) und einem zweiten Gleiter (10) mit voneinander weg zeigenden Gleitflächen (21),
wobei die Gleitflächen (21) des ersten Gleiters (9) und des zweiten Gleiters (10) mit jeweils einer der Laufflächen (6, 7) in Reibeingriff bringbar sind,
wobei der erste Gleiter (9) in einer Hochrichtung (17) senkrecht zu der Auszugsrichtung (8) beweglich gegenüber dem Grundkörper (16) an dem Grundkörper (16) gelagert ist und
wobei der zweite Gleiter (10) in der Hochrichtung (17) an dem Grundkörper (16) festgelegt ist, und
ein Federelement (22),
wobei das Federelement (22) derart an dem Grundkörper (16) gelagert ist, dass das Federelement (22) den ersten Gleiter (9) in der Hochrichtung (17) von dem zweiten Gleiter (10) weg vorspannt,
**dadurch gekennzeichnet, dass**
die Gleitflächen (21) des ersten und des zweiten Gleiters (9, 10) gegenüber dem Grundkörper (16) einen Überstand aufweisen, so dass dann, wenn der Schlitten (1) in dem Schienenelement (2) geführt ist, ausschließlich die Gleitflächen (21) des ersten und des zweiten Gleiters (9, 10) mit den Laufflächen (6, 7) des Schienenelements (2) in Reibeingriff sind.

2. Schlitten (1) nach dem vorhergehenden Anspruch, wobei zumindest der Grundkörper (16) oder der erste Gleiter (9) derart ausgestaltet sind, dass der erste Gleiter (9) bei einem Einfedern entgegen einer von dem auf den ersten Gleiter (9) in der Hochrichtung (17) ausgeübten Federkraft eine Wegbegrenzung erfährt, so dass die Gleitfläche (21) des ersten Gleiters (9) auch bei einem vollständigen Einfedern gegenüber dem Grundkörper (16) einen Überstand aufweist, so dass ausschließlich die Gleitflächen (21) des ersten und des zweiten Gleiters (9, 10) mit den Laufflächen (6, 7) des Schienenelements (2) in Reibeingriff sind.

3. Schlitten (1) nach einem der vorhergehenden Ansprüche, wobei mindestens zumindest die Gleitfläche (21) des ersten Gleiters (9) oder zumindest die Gleitfläche (21) des zweiten Gleiters (9) aus einem Gleitermaterial besteht, wobei das Gleitermaterial von einem Grundkörpermaterial des Grundkörpers (16) verschieden ist.

4. Schlitten (1) nach einem der vorhergehenden Ansprüche, wobei der erste Gleiter (9) eine länglich ausgedehnte, sich in der Auszugsrichtung (8) erstreckende Friktionsbacke (29) und mindestens einen sich von der Friktionsbacke (29) ausgehend in der Hochrichtung (17) erstreckenden Führungsstift (24, 25) aufweist, wobei die Friktionsbacke (29) die Gleitfläche (21) umfasst, wobei der Grundkörper (16) mindestens eine sich in der Hochrichtung (17) erstreckende, zu dem Führungsstift (24, 25) komplementäre Führungsbuchse (27) aufweist, wobei der mindestens eine Führungsstift (24, 25) in die mindestens eine Führungsbuchse (27) eingreift, so dass der erste Gleiter (9) in der Hochrichtung (17) gegenüber dem Grundkörper (16) beweglich gelagert ist.

5. Schlitten (1) nach dem vorhergehenden Anspruch, wobei der erste Gleiter (9) zwei in der Auszugsrichtung (8) voneinander beabstandete Führungsstifte (24, 25) aufweist, wobei der Grundkörper (16) zwei in der Auszugsrichtung (8) voneinander beabstandete Führungsbuchsen (27) aufweist und wobei die zwei Führungsstifte (24, 25) in die zwei Führungsbuchsen (27) eingreifen, so dass der erste Gleiter (9) in der Hochrichtung (17) gegenüber dem Grundkörper (16) beweglich gelagert ist.

6. Schlitten (1) nach dem vorhergehenden Anspruch, wobei eine erste der zwei Führungsbuchsen (27) einen kreisförmigen Querschnitt aufweist und wobei eine zweite der zwei Führungsbuchsen (27) einen von einer Kreisform abweichenden Querschnitt aufweist.

7. Schlitten (1) nach einem der vorhergehenden Ansprüche, wobei der erste Gleiter (9) und der zweite Gleiter (10) Gleichteile sind.

8. Schlitten (1) nach einem der vorhergehenden Ansprüche, wobei der zweite Gleiter (10) eine länglich ausgedehnte, sich in der Auszugsrichtung (8) erstreckende Friktionsbacke (29) und mindestens einen sich von der Friktionsbacke (29) ausgehend in der Hochrichtung (17) erstreckenden Führungsstift (24, 25) aufweist, wobei die Friktionsbacke (29) die Gleitfläche (21) umfasst, wobei der Grundkörper (16) mindestens eine sich in der Hochrichtung (17) erstreckende Klemmbuchse (26) aufweist, wobei der Führungsstift (24, 25) und die Klemmbuchse (26) eine Presspassung bilden und wobei der mindestens eine Führungsstift (24, 25) in die mindestens eine Klemmbuchse (26) eingreift, so dass der zweite Gleiter (10) in der Hochrichtung (17) an dem Grundkörper (16) festgelegt ist.

9. Schlitten (1) nach einem der vorhergehenden Ansprüche, wobei sich das Federelement (22) an dem ersten Gleiter (9) und an dem zweiten Gleiter (10) abstützt.

10. Schlitten (1) nach dem vorhergehenden Anspruch, wobei der erste Gleiter (9) eine länglich ausgedehnte, sich in der Auszugsrichtung (8) erstreckende Friktionsbacke (29) und einen sich in der Hochrichtung (17) ausgehend von der Friktionsbacke (29) erstreckenden ersten Stützstift (28) aufweist, wobei der zweite Gleiter (10) eine länglich ausgedehnte, sich in der Auszugsrichtung (8) erstreckende Friktionsbacke (29) und einen sich in der Hochrichtung (17) ausgehend von der Friktionsbacke (29) erstreckenden zweiten Stützstift (28) aufweist, wobei das Federelement eine Schraubenfeder (22) ist und wobei sich der erste Stützstift (28) und der zweite Stützstift (28) von gegenüberliegenden Seiten in die Schraubenfeder (22) hinein erstrecken.

11. Schlitten (1) nach einem der vorhergehenden Ansprüche, wobei zumindest der Grundkörper (16) oder der erste Gleiter (9) eine Spielreduzierungseinrichtung aufweist,
wobei die Spielreduzierungseinrichtung derart ausgestaltet ist, dass der erste Gleiter (9) im Wesentlichen spielfrei an dem Grundkörper (16) gelagert ist, so dass zumindest
eine Drehbewegung des Grundkörpers (16) relativ zu dem ersten Gleiter (9) um eine zu der Hochrichtung (17) parallele Drehachse durch die Spielreduzierungseinrichtung blockiert ist
oder
eine Drehbewegung des Grundkörpers (16) relativ zu dem ersten Gleiter (9) um eine zu der Hochrichtung (17) und der Auszugsrichtung (8) senkrechte Drehachse durch die Spielreduzierungseinrichtung blockiert ist.

12. Schlitten (1) nach einem der vorhergehenden Ansprüche, wobei der Schlitten (1) ein zweites Paar aus einem dritten Gleiter (11) und einem vierten Gleiter (12) mit voneinander weg zeigenden Gleitflächen (21) aufweist.

13. Schlitten (1) nach dem vorhergehenden Anspruch, wobei der erste, der zweite, der dritte und der vierte Gleiter (11, 12) Gleichteile sind.

14. Lineares Führungssystem (3) mit
einem Schienenelement (2), das zwei zueinander hin zeigende Laufflächen (6, 7) aufweist, und
einem Schlitten (1) nach einem der vorhergehenden Ansprüche,
wobei der Schlitten (1) und das Schienenelement (2) in und entgegen der Auszugsrichtung (8) linear gegeneinander verschiebbar sind und
wobei der erste Gleiter (9) und der zweite Gleiter (10) mit jeweils einer der Laufflächen (6, 7) in Reibeingriff sind.

## Claims

1. A carriage (1) for a linear guide system (3), wherein the linear guide system (3) comprises a rail element (2) having two running surfaces (6, 7) facing towards each other and the carriage (1) movable relative to the rail element (2) in and against a pull-out direction (8), wherein the carriage (1) comprises
a base body (16),
a first pair of a first slider (9) and a second slider (10) comprising sliding surfaces (21) facing away from each other,
wherein the sliding surfaces (21) of the first slider (9) and the second slider (10) can each be brought into frictional engagement with one of the running surfaces (6, 7),
wherein the first slider (9) is mounted on the base body (16) in an upward direction (17) perpendicular to the pull-out direction (8) so as to be movable relative to the base body (16), and
wherein the second slider (10) is fixed to the base body (16) in the upward direction (17), and
a spring element (22),
wherein the spring element (22) is mounted on the base body (16) in such a way that the spring element (22) biases the first slider (9) in the upward direction (17) away from the second slider (10),
**characterised in that**
the sliding surfaces (21) of the first and the second slider (10) comprise a projection relative to the base body (16), so that when the carriage (1) is guided in the rail element (2), only the sliding surfaces (21) of the first and the second slider (9, 10) are in frictional engagement with the running surfaces (6, 7) of the rail element (2).

2. The carriage (1) according to the previous claim, wherein at least the base body (16) or the first slider (9) are arranged in such a way that the first slider (9) undergoes a travel limitation in the event of spring deflection against a spring force exerted on the first slider (9) in the upward direction (17), so that the sliding surface (21) of the first slider (9) comprises a projection relative to the base body (16) even in the event of complete compression, so that only the sliding surfaces (21) of the first and second sliders (9, 10) are in frictional engagement with the running surfaces (6, 7) of the sliding element (2).

3. The carriage (1) according to any one of the previous claims, wherein at least at least the sliding surface (21) of the first slider (9) or at least the sliding surface (21) of the second slider (9) consists of a slider material, wherein the slider material is different from a base body material of the base body (16).

4. The carriage (1) according to any one of the previous claims, wherein the first slider (9) comprises an elongate extended friction jaw (29) extending in the pull-out direction (8) and at least one guiding pin (24, 25) extending from the friction jaw (29) in the upward direction (17), wherein the friction jaw (29) comprises the sliding surface (21), wherein the base body (16) comprises at least one guiding bush (27) extending in the upward direction (17) and being complementary to the guiding pin (24, 25), wherein the at least one guiding pin (24, 25) engages in the at least one guiding bush (27), so that the first slider (9) is movably mounted in the upward direction (17) relative to the base body (16).

5. The carriage (1) according to the previous claim, wherein the first slider (9) comprises two guiding pins (24, 25) spaced apart in the pull-out direction (8), wherein the base body (16) comprises two guiding bushes (27) spaced apart in the pull-out direction (8) and wherein the two guiding pins (24, 25) engage in the two guiding bushes (27), so that the first slider (9) is movably mounted in the upward direction (17) relative to the base body (16).

6. The carriage (1) according to the previous claim, wherein a first of the two guiding bushes (27) comprises a circular cross-section and wherein a second of the two guiding bushes (27) comprises a cross-section deviating from a circular shape.

7. The carriage (1) according to any one of the previous claims, wherein the first slider (9) and the second slider (10) are identical parts.

8. The carriage (1) according to any one of the previous claims, wherein the second slider (10) comprises an elongate extended friction jaw (29) extending in the pull-out direction (8) and at least one guiding pin (24, 25) extending from the friction jaw (29) in the upward direction (17), wherein the friction jaw (29) comprises the sliding surface (21), wherein the base body (16) comprises at least one clamping bush (26) extending in the upward direction (17), wherein the guiding pin (24, 25) and the clamping bush (26) form an interference fit and wherein the at least one guiding pin (24, 25) engages in the at least one clamping bush (26), so that the second slider (10) is fixed to the base body (16) in the upward direction (17).

9. The carriage (1) according to any one of the previous claims, wherein the spring element (22) is supported on the first slider (9) and on the second slider (10).

10. The carriage (1) according to the previous claim, wherein the first slider (9) comprises an elongated friction jaw (29) extending in the pull-out direction (8) and a first support pin (28) extending in the upward direction (17) from the friction jaw (29), wherein the second slider (10) comprises an elongated friction jaw (29) extending in the pull-out direction (8) and a second support pin (28) extending in the upward direction (17) from the friction jaw (29), wherein the spring element is a coil spring (22) and wherein the first support pin (28) and the second support pin (28) extend from opposite sides into the coil spring (22).

11. The carriage (1) according to any one of the previous claims, wherein
at least the base body (16) or the first slider (9) comprises a clearance reducing means,
wherein the clearance reducing means is arranged in such a way that the first slider (9) is mounted on the base body (16) substantially free of play, so that at least
a rotational movement of the base body (16) relative to the first slider (9) about an axis of rotation parallel to the upward direction (17) is blocked by the clearance reducing means
or
a rotational movement of the base body (16) relative to the first slider (9) about an axis of rotation perpendicular to the upward direction (17) and the pull-out direction (8) is blocked by the clearance reducing means.

12. The carriage (1) according to any one of the previous claims, wherein the carriage (1) comprises a second pair of a third slider (11) and a fourth slider (12) with sliding surfaces (21) facing away from each other.

13. The carriage (1) according to the previous claim, wherein the first, second, third and fourth sliders (11, 12) are identical parts.

14. A linear guide system (3) comprising
a rail element (2) comprising two mutually facing running surfaces (6, 7), and
a carriage (1) according to any one of the previous claims,
wherein the carriage (1) and the rail element (2) are linearly displaceable relative to each other in and against the pull-out direction (8), and
wherein the first slider (9) and the second slider (10) are each in frictional engagement with one of the running surfaces (6, 7).

## Revendications

1. Chariot (1) pour un système de guidage linéaire (3) comprenant un élément formant rail (2) avec deux surfaces de roulement (6, 7) orientées l'une vers l'autre et le chariot (1) mobile par rapport à l'élément formant rail (2) dans et à l'encontre d'une direction d'extension (8), le chariot (1) comprenant
un corps de base (16),
une première paire composée d'un premier patin (9) et d'un deuxième patin (10) avec des surfaces de glissement (21) orientées dans des directions opposées l'une de l'autre,
les surfaces de glissement (21) du premier patin (9) et du deuxième patin (10) pouvant être mises en prise par frottement avec respectivement une des surfaces de roulement (6, 7),
le premier patin (9) étant monté mobile par rapport au corps de base (16) au corps de base (16) dans une direction verticale (17) perpendiculaire à la direction d'extension (8) et
le deuxième patin (10) étant fixé au corps de base (16) dans la direction verticale (17), et
un élément formant ressort (22),
l'élément formant ressort (22) étant monté au corps de base (16) de sorte que l'élément formant ressort (22) précontraigne le premier patin (9) dans la direction verticale (17) dans une direction opposée au deuxième patin (10),
**caractérisé en ce que**
les surfaces de glissement (21) des premier et deuxième patins (9, 10) comprennent une saillie par rapport au corps de base (16), de sorte que, lorsque le chariot (1) est guidé dans l'élément formant rail (2), seules les surfaces de glissement (21) des premier et deuxième patins (9, 10) soient en prise par frottement avec les surfaces de roulement (6, 7) de l'élément formant rail (2).

2. Chariot (1) selon la revendication précédente, au moins le corps de base (16) ou le premier patin (9) étant conçu de telle manière que le premier patin (9) subisse une limitation de course lors d'un rappel à l'encontre d'une force élastique exercée sur le premier patin (9) dans la direction verticale, de sorte que la surface de glissement (21) du premier patin (9) présente une saillie par rapport au corps de base (16) même lors d'un rappel complet, de sorte que seules les surfaces de glissement (21) des premier et deuxième patins (9, 10) soient en prise par frottement avec les surfaces de roulement (6, 7) de l'élément formant rail (2).

3. Chariot (1) selon l'une quelconque des revendications précédentes, pour le moins au moins la surface de glissement (21) du premier patin (9) ou au moins la surface de glissement (21) du deuxième patin (9) étant constituée d'un matériau de glissement, le matériau de glissement étant différent d'un matériau de corps de base du corps de base (16).

4. Chariot (1) selon l'une quelconque des revendications précédentes, le premier patin (9) comprenant une mâchoire de friction (29) allongée s'étendant dans la direction d'extension (8) et au moins une broche de guidage (24, 25) s'étendant à partir de la mâchoire de friction (29) dans la direction verticale (17), la mâchoire de friction (29) comprenant la surface de glissement (21), le corps de base (16) comprenant au moins une douille de guidage (27) complémentaire à la broche de guidage (24, 25) et s'étendant dans la direction verticale (17), ladite au moins une broche de guidage (24, 25) venant en prise dans ladite au moins une douille de guidage (27) de sorte que le premier patin (9) soit monté mobile par rapport au corps de base (16) dans la direction verticale (17).

5. Chariot (1) selon la revendication précédente, le premier patin (9) comprenant deux broches de guidage (24, 25) espacées l'une de l'autre dans la direction d'extension (8), le corps de base (16) comprenant deux douilles de guidage (27) espacées l'une de l'autre dans la direction d'extension (8) et les deux broches de guidage (24, 25) venant en prise dans les deux douilles de guidage (27) de sorte que le premier patin (9) soit monté mobile par rapport au corps de base (16) dans la direction verticale (17).

6. Chariot (1) selon la revendication précédente, une première des deux douilles de guidage (27) ayant une section transversale circulaire et une deuxième des deux douilles de guidage (27) ayant une section transversale différente d'une forme circulaire.

7. Chariot (1) selon l'une quelconque des revendications précédentes, le premier patin (9) et le deuxième patin (10) étant des pièces identiques.

8. Chariot (1) selon l'une quelconque des revendications précédentes, le deuxième patin (10) comprenant une mâchoire de friction (29) allongée s'étendant dans la direction d'extension (8) et au moins une broche de guidage (24, 25) s'étendant à partir de la mâchoire de friction (29) dans la direction verticale (17), la mâchoire de friction (29) comprenant la surface de glissement (21), le corps de base (16) comprenant au moins une douille de serrage (26) s'étendant dans la direction verticale (17), la broche de guidage (24, 25) et la douille de serrage (26) formant un ajustement serré et ladite au moins une broche de guidage (24, 25) venant en prise dans ladite au moins une douille de serrage (26) de sorte que le deuxième patin (10) est fixé au corps de base (16) dans la direction verticale (17).

9. Chariot (1) selon l'une quelconque des revendications précédentes, l'élément formant ressort (22) s'appuyant sur le premier patin (9) et sur le deuxième patin (10).

10. Chariot (1) selon la revendication précédente, le premier chariot (9) comprenant une mâchoire de friction (29) allongée s'étendant dans la direction d'extension (8) et une première broche d'appui (28) s'étendant dans la direction verticale (17) à partir de la mâchoire de friction (29), le deuxième patin (10) comprenant une mâchoire de friction (29) allongée s'étendant dans la direction d'extension (8) et une deuxième broche d'appui (28) s'étendant dans la direction verticale (17) à partir de la mâchoire de friction (29), l'élément formant ressort étant un ressort hélicoïdal (22) et la première broche d'appui (28) et la deuxième broche d'appui (28) s'étendant dans le ressort hélicoïdal (22) depuis des côtés opposés.

11. Chariot (1) selon l'une quelconque des revendications précédentes,
au moins le corps de base (16) ou le premier patin (9) comprenant un dispositif de réduction de jeu,
le dispositif de réduction de jeu étant conçu de telle manière que le premier patin (9) soit monté essentiellement sans jeu au corps de base (16), de sorte qu'au moins
un mouvement de rotation du corps de base (16) par rapport au premier patin (9) autour d'un axe de rotation parallèle à la direction verticale (17) est bloqué par le dispositif de réduction de jeu
ou
un mouvement de rotation du corps de base (16) par rapport au premier patin (9) autour d'un axe de rotation perpendiculaire à la direction verticale (17) et à la direction d'extension (8) est bloqué par le dispositif de réduction de jeu.

12. Chariot (1) selon l'une quelconque des revendications précédentes, le chariot (1) comprenant une deuxième paire constituée d'un troisième patin (11) et d'un quatrième patin (12) avec des surfaces de glissement (21) orientées dans des directions opposées l'une de l'autre.

13. Chariot (1) selon la revendication précédente, les premier, deuxième, troisième et quatrième patins (11, 12) étant des pièces identiques.

14. Système de guidage linéaire (3), comprenant
un élément formant rail (2) comprenant deux surfaces de roulement (6, 7) orientées l'une vers l'autre, et
un chariot (1) selon l'une quelconque des revendications précédentes,
le chariot (1) et l'élément formant rail (2) pouvant être déplacés de manière linéaire l'un par rapport à l'autre dans et à l'encontre de la direction d'extension (8), et
le premier patin (9) et le deuxième patin (10) étant mis en prise par frottement avec respectivement une des surfaces de roulement (6, 7).
